# EUROPEAN PATENT SPECIFICATION

(11) **EP 3 746 877 B1**
(45) Date of publication and mention of the grant of the patent: **09.11.2022**
(21) Application number: 18703286.7
(22) Date of filing: 31.01.2018
(51) Int. Cl.: G06F 3/14, G09G 5/00, G09G 5/12, G06F 11/16, G06F 11/32, B61L 15/00, B61L 25/08

(54) **METHOD AND DEVICE FOR DISPLAYING SAFETY UNIT SIGNALS WITH INFORMATION REGARDING RELIABILITY OF DISPLAYED SIGNALS**
VERFAHREN UND VORRICHTUNG ZUR ANZEIGE VON SICHERHEITSEINHEITSIGNALEN MIT INFORMATIONEN ÜBER DIE ZUVERLÄSSIGKEIT VON ANGEZEIGTEN SIGNALEN
PROCÉDÉ ET DISPOSITIF D'AFFICHAGE DE SIGNAUX D'UNITÉ DE SÉCURITÉ AVEC DES INFORMATIONS CONCERNANT LA FIABILITÉ DE SIGNAUX AFFICHÉS

(43) Date of publication of application: 09.12.2020
(73) Proprietor: KONCAR - KET d.o.o., 10000 Zagreb (HR); KONCAR - INSTITUT ZA ELEKTROTEHNIKU d.o.o., 10000 Zagreb (HR)
(72) Inventor: BILIC, Mario, 10000 Zagreb (HR); MRAOVIC, Davor, 10430 Samobor (HR)
(74) Representative: Bihar, Zeljko
(86) International application number: PCT/EP2018/052375
(87) International publication number: WO 2019/149348

(56) References cited:
- EP-A1- 1 315 089
- EP-A1- 3 018 650
- US-A- 4 859 997
- US-A- 5 805 134

## Description

### Field of the invention

The present invention discloses a novel method and a device for displaying safety unit signals with the information regarding reliability of displayed signals. In the first aspect, the present invention belongs to the field of error detection of received data from signalling devices using hardware redundancy. Considering the main use, the disclosed invention belongs to the class of safety arrangements for indicating malfunction of signalling devices, or corresponding redundant signalling paths, mainly used in railway traffic, nuclear powerplants, ship instrumentations and aviation. The disclosed method and device is applicable everywhere where the human is acting as the safe comparator of received redundant signals.

### Technical Problem

Nowadays, various systems are used in which control is performed by a control circuit and the result of the applied control is displayed on a display unit. Several techniques are readily used in order to obtain a display output of high reliability that corresponds to the system state; mostly based on adequate redundancy level. As will be described in the next section, one of the known methods is to divide a meaningful symbol for the human operator into a plurality of sections. These sections are then independently feed by redundant signalling paths, i.e. redundant signals; and the meaningful and complete symbol is displayed in the same frame only if the system is working correctly.

The observed technical problem with the above cited class of devices is that they are capable to show only the condition of redundant signal paths. Namely, this class of devices indicates "working" or "not working" signalling paths only - in an easily observed manner. Other possible internal hardware failures which may lead to any desynchronization of redundant signalling paths, or the information whether all processing units are processing the redundant signals from the corresponding safety units, i.e. freezing, remains hidden to the human observer. The human acting as the safe comparator should immediately recognise any defect in an intuitive and simple way, that is not the case with the present class of devices.

The present invention solves the observed problem in a reliable way by introducing animated glint graphical effect in addition to already know solution in the art. The glint graphical effect demonstrates to the human safe comparator any phase decoherence, i.e. desynchronization, among the redundant signalling paths and that the corresponding hardware - each processing units for processing the redundant signal - is working flawlessly.

### Previous State of the Art

The US patent published as US 5,805,134 for the invention: Method and apparatus of detecting and displaying abnormal conditions utilizing a display control apparatus; inventors are Seki Hiroyuki et *al.;* teaches about the highly reliable display control apparatus and method suitable for use in a computer control system where it is required to have high degree of reliability. According to the said invention, a meaningful symbol is divided into a plurality of sections and these sections are independently feed with the inputs of an interactive man-machine system through different systems. So, the complete and meaningful symbol is displayed in the same frame if all redundant paths show the same value. This is a typical solution that is possible to find in the art; the said document remains silent regarding the observation of any desynchronization of redundant signalling paths or non-processing of the redundant signals from the corresponding safety units, which may signal hardware problems with the device in use. The international PCT patent application published as WO 2016/177518 A1 for the invention: Method and device for displaying a course of a process of at least one railway safety unit, and railway safety system having such a device; inventor is Burkhardt Marc, represents the modification of the above cited US 5,805,134. The said WO document teaches about a method for displaying a course of a process of at least one railway safety unit. In order to simplify the displaying of the course of the process, a pair of display spectacles, preferably virtual reality (VR) headset, is used as a data display unit. The first image data which corresponds to the first signalling path is directed to the right eye, and the second data which corresponds to the second signalling path is directed to the left eye of the human. Namely, the human is acting as the safe comparator, and forms the entire meaningful symbol in his mind based on the said video inputs. Again, the document remains silent regarding the observation of any desynchronization of redundant signalling paths which may signalling hardware problems with the device. Furthermore, the system freezing problem seems to remain unsolved for the described solution that is not the case with the disclosed invention. Document D1 (EP 3 018 650 A1 (SIEMENS AG [DE]) 11 May 2016 (2016-05-11)) discloses an electronic-paper display unit (14) that is controlled by two image data generation units (20,22). The electronic-paper display unit is configured to superimposed the image data (24,26) of the image data generation units such that a partially resulting of the gray value gradations is enabled upon superposition of the image data of the image data generation units. The electronic-paper display unit is configured to select the image data of the image data generation units such that a useful indication is provided.

### Summary of the Invention

The invention is set out in the independent claims. Preferred embodiments of the invention are outlined in the dependent claims.

### Brief Description of the Drawings

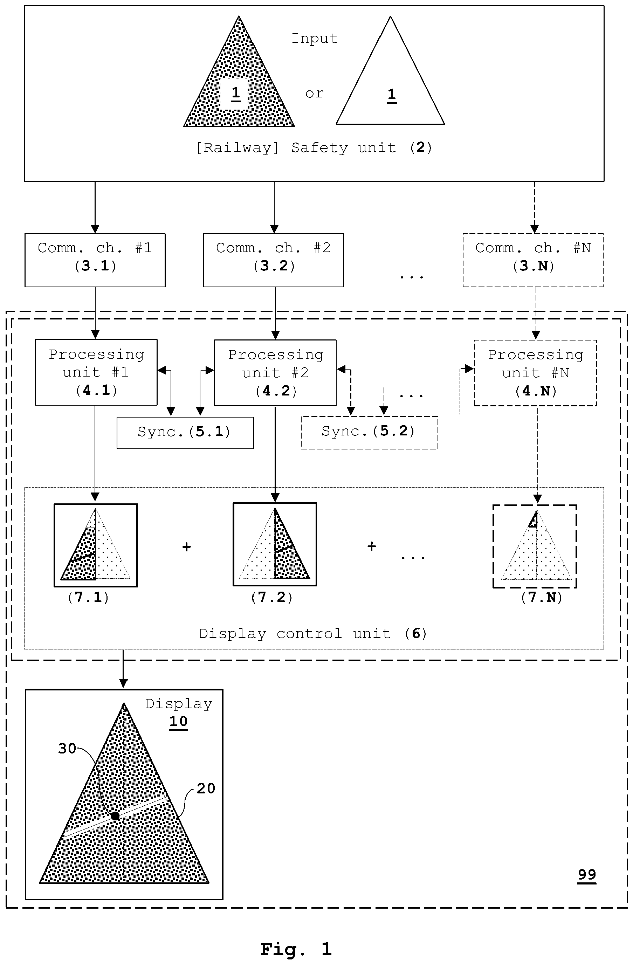

Fig. 1 shows the entire system consisting of safety unit and the device for displaying safety unit binary signals.

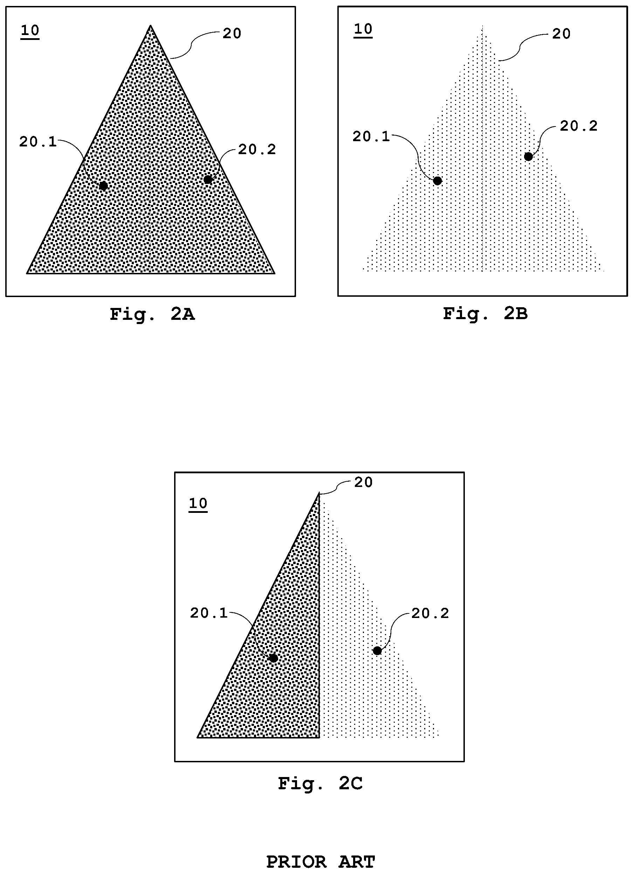

Figs. 2A, 2B and 2C depict the prior art solution with two redundant signalling paths for the meaningful symbol; Fig. 2A representing TRUE signal, Fig. 2B represents FALSE signal, and Fig 2C represents the failure in one of the redundant signalling paths displaying TRUE signal.

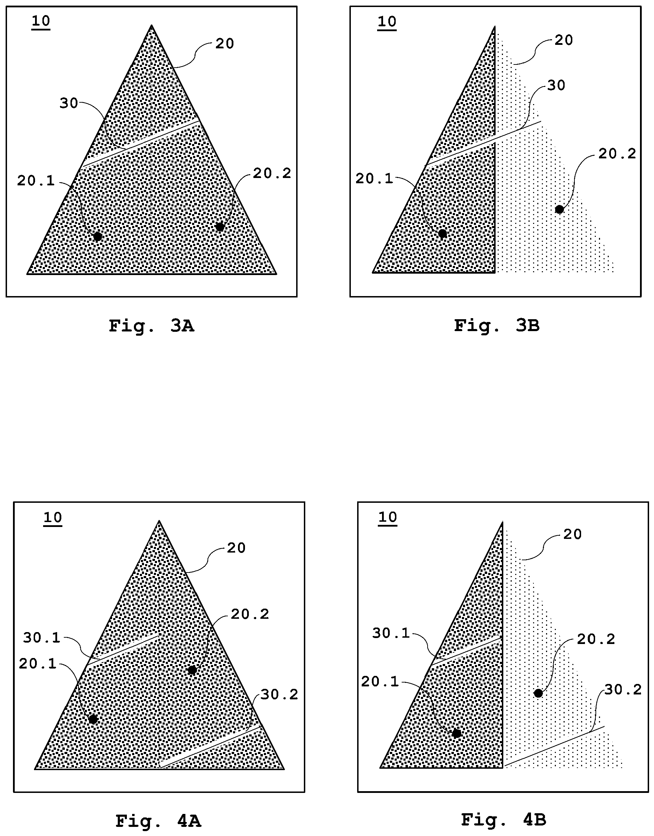

Fig. 3A shows the situation where both processing units are synchronised, i.e. the glint effect is continuous, and processing units correctly process the binary input signal. Fig. 3B shows the situation where both processing units are synchronised and operational, but the right symbol part is different from the left signal part which indicates the problem with the signalling paths.
Fig. 4A shows the situation where both processing units are operational but desynchronised, i.e. the glint effect is not continuous, which indicates device's hardware failure. The signalling paths are not affected with the error and convey the identical signals to the human as the safe comparator. Fig. 4B shows the situation where both processing units are again operational but desynchronised, and the right symbol part is different from the left signal part which indicates additional problem with the signalling paths.

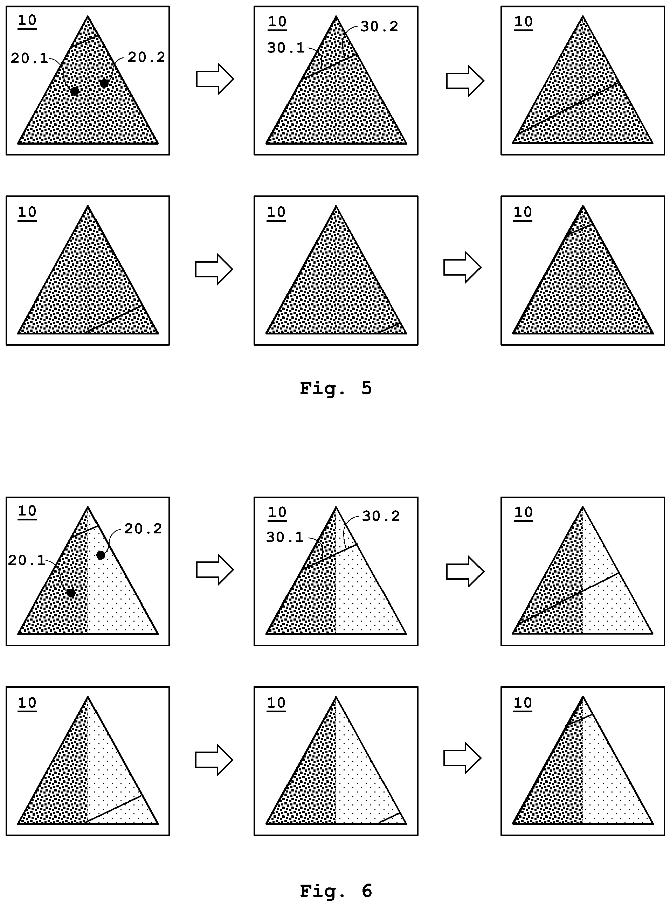

Figs. 3A, 3B, 4A and 4B should be understood in a manner that the glint effect travels across the displayed symbol. These situations, i.e. the animations, of the signalling fixed in time for the Figs. 3A, 3B, 4A and 4B, are depicted on the corresponding set of images given by the Figs. 5, 6, 7 and 8 which show the time development of the glint effect.

### Detailed Description

The reliable signalling plays the important role in automation of railway traffic, nuclear powerplants, ship instrumentations and aviation. The signalling which is capable to minimise human and/or machine errors is vital for the proper and safe operation which saves human lives and prevents mechanical damage of the equipment. The human, as the safe comparator, plays an important role in the signalling chain and her/his decision is based predominantly on the visual information "read" from the display.

The present invention is dedicated to reliable processing of one or more binary safety unit signals (1) generated by safety units (2). As a good example for said safety unit (2) one can use a level crossing, i.e. an intersection where a railway line crosses a road or path at the same level. For remote monitoring and control of such level crossing, it is necessary to unambiguously establish the exact ramp position of the said level crossing from some remote location. The correct ramp status, where said ramp is either lifted for free passage or closed, may in such cases save many lives. In practice, such level crossing equipment generates binary signal that is transmitted via two or more redundant communication channels (3.i; i = 1, 2, ... N) to the remotely located data processing device (99). Each redundant communication channel (3.i) may be formed in accordance with prescribed technical standards used in the field; from widely used serial RS485, RS422, RS232 and RS423 standards, modems, optical data communication channels up to an analog data-cables, if allowable.

Once the binary signal {FALSE, TRUE} is formed to reflect the status of a safety equipment such as level crossing's ramp, said signal is transferred via two or more redundant communication channels (3.i). All communication channels (3.i) are connected to their independent processing units (4.i; i = 1, 2, ... N) located within the device (99). The role of each processing unit (4.i) is to convert the received FALSE or TRUE signal into the adequate digital signal (7.i; i = 1, 2, ... N) representing part of the meaningful symbol. All signals (7.1, 7.2, ... 7.N) together forms a meaningful symbol in desired geometrical form, for instance triangle form as represented on the Fig. 1. Each digital signal (7.i) is then converted into video output within the display control unit (6) for displaying the said signal on the display (10) in the form of symbol (20) to which appearance the human is susceptible. This symbol (20) is composed from the symbol parts (20.i; i = 1, 2, ... N) generated by the input signal processed by processing units (4.i). So, the display control unit (6):
A. highlight a part of a symbol geometry on the display for those processing units receiving the signal TRUE as the safety binary unit signal (1); or
B. darken a part of a symbol geometry for those processing units
receiving the signal FALSE as the safety binary unit signal (1). It is worth to mention again that all parts (20.i) of said symbol geometry form together picture of entire symbol (20) for the dedicated safety unit signal (1). The displayed signal is always visually different from the background screen to the human as the safe comparator, as depicted on the Figs. 3A, 3B, 4A and 4B.

### The glint effect

According to the said invention, beside above mentioned, each processing unit (4.i) adds the animated graphical glint effect (30.i; i = 1, 2, ... N) to the digital signal (7.i; i = 1, 2, ... N) resulting with displaying the symbol parts (20.i; i = 1, 2, ... N) with the said glint effect (30.i; i = 1, 2, ... N). The glint effect, as used herein, is the graphical animated effect that can be found by other names in the related art: i.e. light sweep effect, light glint, light glint effects, text glint or glint effect flash. There are several good tutorials that explain this kind of effect, two are listed below:
#1 - https://www.youtube.com/watch?v=lkX875V_7iw (at 3rd minute)
#2 - https://www.youtube.com/watch?v=N9LAGHlqmWU (first 20 seconds)

The glint effect is therefore added to the digital signal. The way in which the effect is generated on the hardware/software level is not of particular interest; the resulting technical effect only matters. The person skilled in the art will immediately recognize that the said glint effect can be easily produced by the machine code encoded into microcontroller acting as the processing units (4.i) for performing the desired task on the digital signal (7.i; i = 1, 2, ... N) .

For devices for displaying safety unit signals it is natural to use multiple processing units (4.i) for performing the desired tasks. Each processing unit (4.i) will add its own glint animation part (30.i) to the symbol part (20.i) in an autonomous manner. Even in the perfect scenario sooner or later the initial synchronisation between the processing units (4.i) will be lost due to the small differences in clock operations among the processing units (4.i) or similar component tolerances. Therefore, the glint effect will be visually discontinued. That technical feature will be used in the present invention for signaling hardware failure.

According to the one embodiment of the present invention, the synchronization unit (5.j) connects and synchronises two neighbouring processing units (4.i, 4.i+1) all the time. This synchronisation can be performed on the hardware level; i.e. between two microcontrollers acting as the processing units (4.i, 4.i+1). Another good way for obtaining synchronisation among the processing units is via a communication bus or via direct exchange of the clock information, i.e. by discrete digital signals (4.i, 4.i+1).

In yet another embodiment of the present invention, the only one synchronisation unit (5) connects and synchronises all processing units (4.i).

The technical role of the synchronisation units (5.i) are to show, via the generated synchronised glint effect (30), that some possible mechanical stress or electrical discharge harms the hardware in the way that the redundant signalling paths (3.i) are in good condition but the processing units (4.i) have serious defects that can to lead to the hardware malfunctions.

Finally, for the skilled person in the art it is obvious that any external monitor and keyboard may serve as the input-output device for displaying the received data and setting the configuration of the described device (99).

The examples below discuss the signal handling in detail. In the following examples the redundancy level N=2 is studied, the symbol (20) is formed as the triangle, each processing unit (4.1, 4.2) draws left symbol part (20.1) or right symbol part (20.2) of the mentioned triangle (20), together with the corresponding left glint graphical effect (30.1) or right glint graphical effect (30.2) imposed to the said symbol.

### Example 1 - normal operation

Let us suppose that the safety unit (2) displays signal that has to be interpreted as the TRUE for the human acting as the safe comparator; as depicted at the Fig 3A. If all processing units (4.1, 4.2) are synchronised, the glint graphical effect (30) is composed from two parts (30.1, 30.2) that form a straight and continuous line which sweeps across the symbol (20). The animated part of the glint effect is presented by the six consecutive pictures presented on the Fig. 5. In case of the signal FALSE, the layout will be identical to those presented on the Fig. 2B with the addition of the glint graphical effect (30) that is composed again from two parts (30.1, 30.2) and forms a straight and continuous line that sweeps across the symbol (20).

### Example 2 - error in the communication channel

Let us suppose that the safety unit (2) displays signal that has to be interpreted as the TRUE for the human acting as the safe comparator. However, the communication channel (3.2) is malfunctioning which results with the situation depicted on the Fig. 3B. All processing units (4.1, 4.2) are synchronised, the glint graphical effect (30), that is composed from two parts (30.1, 30.2), forms a straight and continuous line that sweeps across the symbol (20) and indicates normal operation of the processing units (4.1, 4.2). However, the difference between the left symbol part (20.1) and the right symbol part (20.2) indicates a problem with the communication channel (3.2). For the mention situation, the animated part of the glint effect is presented by the six consecutive pictures presented on the Fig. 6.

### Example 3 - error in the device for displaying safety unit signals

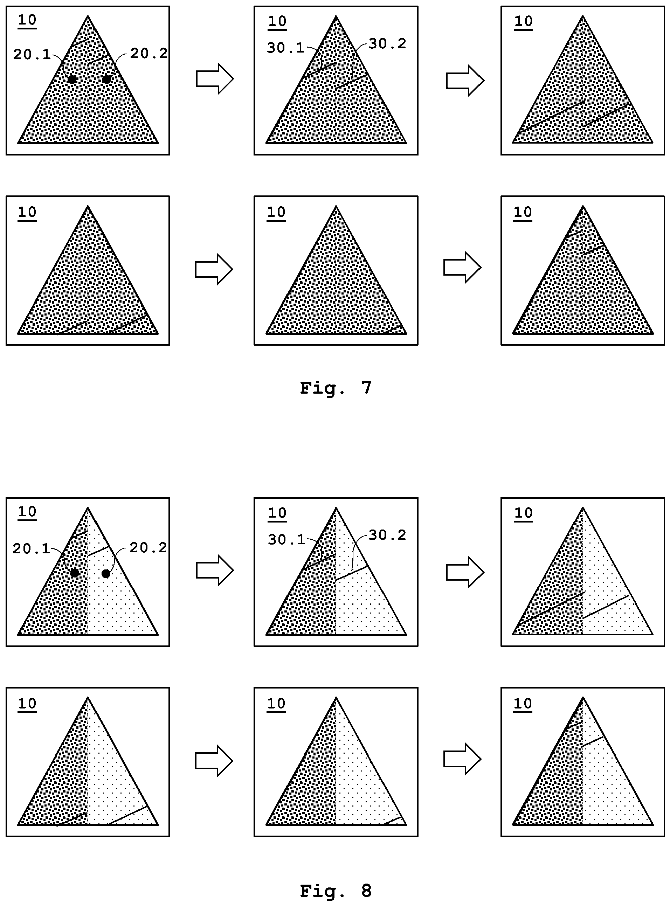

Let us suppose that the safety unit (2) displays signal that has to be interpreted as the TRUE for the human acting as the safe comparator; as depicted on the Fig. 4A. However, for unknown reasons the processing units (4.1, 4.2) are desynchronised which is obvious from the discontinued animated glint effect, i.e. part (30.1) and part (30.2) are not aligned at the border where the left symbol part (20.1) and the right symbol part (20.2) merge into the entire symbol (20). This situation indicates the internal hardware failure where at least the synchronisation unit is malfunctioning. For the mention situation, the animated part of the glint effect is presented by the six consecutive pictures presented on the Fig. 7.

### Example 4 - error in the device and in the communication channel

Let us suppose that the safety unit (2) displays signal that has to be interpreted as the TRUE for the human acting as the safe comparator; as depicted on the Fig. 4B. However, for unknown reasons the processing units (4.1, 4.2) are desynchronised which is obvious from the discontinued animated glint effect, i.e. part (30.1) and part (30.2) are not aligned at the border where the left symbol part (20.1) and the right symbol part (20.2) merge into the entire symbol (20). This situation indicates the internal hardware failure where at least the synchronisation unit is malfunctioning. Furthermore, the communication channel 2 is not functioning properly; the right symbol (20.2) shows false condition. For the mention situation, the animated part of the glint effect is presented by the six consecutive pictures presented on the Fig. 8.

From the above cited examples, the skilled person in the art will understand the improvement introduced by the animated glint effect that shows the safety system condition in a more intuitive manner. Furthermore, the animation of the glint effect undoubtedly indicated that the processing units (4.i) are operational and not in a freeze condition caused by hardware/software problems.

In addition, it is worth to note that it is possible to extend this invention on the signalling which are not of the binary nature in a rather straightforward manner.

### Industrial Applicability

Industrial applicability of the present invention is obvious. The disclosed is a method of operating data processing device for displaying binary safety unit signals generated by safety units and the device as such. According to the nature of invention this is not just a displaying the information, but the displaying the information with further significant technical effect. A feature defining a presentation of information produces hereby a further technical effect and credibly assists the user in performing a technical task by means of a continued and/or guided human-machine interaction process where the user, acted as the safe comparator, should perform further actions based on the received information from the disclosed device.

### References

- 1: signal
- 2: safety unit
- 3.i: communication channel; i = 1, 2, ... N
- 4.i: processing unit; i = 1, 2, ... N
- 5.j: synchronization unit; j = 1, 2, ..
- 6: display control unit
- 7.i: digital signal; i = 1, 2, ... N
- 10: display
- 20: symbol
- 20.1: left symbol part
- 20.2: right symbol part
- 30: safety glint graphical effect
- 30.1: left glint graphical effect
- 30.2: right glint graphical effect
- 99: device for displaying one or more safety unit signals

## Claims

1. A method of operating a data processing device (99) for displaying one or more binary safety unit signals (1) generated by one or more remotely located safety units (2) from the said data processing device (99):
- where the data processing device (99) has a plurality of processing units (4) for processing safety unit signals (1), at least one synchronization unit (5) and a display control unit (6) for displaying the digital signals (7) generated by processing units (4) as a set of graphical symbols (20) on a display (10), and optionally input-output devices;
- where each binary safety unit signal (1) is redundantly transmitted over two or more independent communication channels (3.i); i = 1, 2, ... N to the said data processing device (99); each
communication channel (3.i) is connected to the corresponding processing unit (4.i) of the said data processing device (99), where each
processing unit (4.i) sends a signal (7.i) to the display control unit (6):
A. to generate and to highlight only a part of a symbol geometry (20.i) on the display (10) for the said processing units (4.i) which received the signal TRUE as the binary safety unit signal (1), or
B. to generate and to darken only a part of a symbol geometry (20.j) on the display (10) for the said processing units (4.j) which received the signal FALSE as the binary safety unit signal (1);
where all parts of a symbol geometry (20.i, 20.j, ...) form together picture of entire symbol (20) for the dedicated safety unit signal (1) which is visually different from the background screen to the human as the safe comparator;
**characterised by that**
- each synchronization unit (5.j) connects and synchronises the said neighbouring processing units (4.i, 4.i+1) which process the same binary safety unit signal (1);
- where the synchronisation signal from the synchronization unit (5.i) is used for the calculation of an animated glint graphical effect (30) by the neighbouring processing units (4.i, 4.i+1) which process the same binary safety unit signal (1);
- where the said glint graphical effect (30) is animated to move across the symbol (20) as an object (30) that is composed from the parts (30.i) in a manner that:
C. the safety glint graphical effect (30) appears continuous across the symbol (20) if all the processing units (4.i) are synchronised, and
D. the safety glint graphical effect (30) appears discontinued for all symbol parts (20.k) generated by the corresponding processing units (4.k) which are desynchronised from the set of processing units (4.i) which are mutually synchronised; wherein the said discontinuity in the glint graphical effect (30) indicates the data processing device (99) hardware failure for the human as the safe comparator.

2. The method of operating the data processing device (99) for displaying one or more binary safety unit signals (1) generated by one or more safety units (2) according to claim 1, wherein only one synchronization unit (5.1) is used as the synchronization unit for all processing units (4.i) used for displaying the same graphical symbol (20) of one safety unit signal (1) that is redundantly transmitted over two or more independent communication channels (3.i).

3. The method of operating the data processing device (99) for displaying one or more binary safety unit signals (1) generated by one or more safety units (2) according to claim 2, wherein two processing units (4.1, 4.2) are used for displaying one graphical symbol (20).

4. The method of operating the data processing device (99) for displaying one or more binary safety unit signals (1) generated by one or more safety units (2) according to any of the previous claims 1-3, wherein the animation of the glint graphical effect parts (30.i) across one symbol (20) indicates that the corresponding processing units (4.i), responsible for generating the said glint graphical effect parts (30.i), are operational and sensitive for the receiving signals from the dedicated safety unit (2) with the safety unit signal (1) that is redundantly transmitted over two or more independent communication channels (3.i).

5. The method of operating the data processing device (99) for displaying one or more binary safety unit signals (1) generated by one or more safety units (2) according to any of the previous claims 1-4, wherein the said glint graphical effect (30) is line-shaped.

6. The method of operating the data processing device (99) for displaying one or more binary safety unit signals (1) generated by one or more safety units (2) according to any of the previous claims 1-5, wherein the external monitor and keyboard are used for displaying the received data and to configure the said data processing device (99).

7. A data processing device (99) configured to display one or more binary safety unit signals (1) generated by one or more remotely located safety units (2) from the said data processing device (99), where each binary safety unit signal (1) is redundantly transmitted over two or more independent communication channels (3.i); i = 1, 2, ... N to the said processing device (99), where the said processing device (99) consists of a plurality of processing units (4) configured to process safety unit signals (1), at least one synchronization unit (5) and a display control unit (6) configured to display the digital signal (7) generated by a processing units (4) as a set of graphical symbols (20) on a display (10), and optionally input-output devices, the said data processing device (99)configured to carry out the method defined in any of the claims 1-6.

8. The data processing device (99) according to claim 7, wherein the binary safety unit signal (1) is railway safety unit signal which establishes the exact ramp position of the level crossing from the remote location

## Patentansprüche

1. Verfahren zum Betreiben einer Datenverarbeitungsvorrichtung (99) zum Anzeigen eines oder mehrerer binärer Sicherheitseinheitssignale (1), die von einer oder mehreren ferngelegenen Sicherheitseinheiten (2) von der Datenverarbeitungsvorrichtung (99) erzeugt werden:
- wo die Datenverarbeitungsvorrichtung (99) eine Vielzahl von Verarbeitungseinheiten (4) zum Verarbeiten von Sicherheitseinheitssignalen (1), zumindest eine Synchronisationseinheit (5) und eine Anzeigesteuereinheit (6) zum Anzeigen der digitalen Signale (7), die von Verarbeitungseinheiten (4) erzeugt werden, als ein Satz von grafischen Symbolen (20) auf einer Anzeige (10), und optional Eingabe-Ausgabe-Vorrichtungen aufweist;
- wo jedes binäre Sicherheitseinheitssignal (1) redundant über zwei oder mehr unabhängige Kommunikationskanäle (3.i); i = 1, 2, ... N an die Datenverarbeitungsvorrichtung (99) übertragen wird, jeder Kommunikationskanal (3.i) mit der entsprechenden Verarbeitungseinheit (4.i) der Datenverarbeitungsvorrichtung (99) verbunden ist, wo jede Verarbeitungseinheit (4.i) ein Signal (7.i) an die Anzeigesteuereinheit (6) sendet:
A. um nur einen Teil einer Symbolgeometrie (20.i) auf der Anzeige (10) für die Verarbeitungseinheiten (4.i), die das Signal WAHR als das binäre Sicherheitseinheitssignal (1) empfangen haben, zu erzeugen und hervorzuheben, oder
B. um nur einen Teil einer Symbolgeometrie (20.j) auf der Anzeige (10) für die Verarbeitungseinheiten (4.j), die das Signal FALSCH als das binäre Sicherheitseinheitssignal (1) empfangen haben, zu erzeugen und zu verdunkeln;
wo alle Teile einer Symbolgeometrie (20.i, 20.j, ...) gemeinsam ein Bild eines gesamten Symbols (20) für das dedizierte Sicherheitseinheitssignal (1) bilden, das sich für den Menschen als der sichere Komparator visuell von dem Hintergrundbildschirm unterscheidet;
**dadurch gekennzeichnet, dass**
- jede Synchronisationseinheit (5.j) die benachbarten Verarbeitungseinheiten (4.i, 4.i+1) verbindet und synchronisiert, die dasselbe binäre Sicherheitseinheitssignal (1) verarbeiten;
- wo das Synchronisationssignal von der Synchronisationseinheit (5.i) für die Berechnung eines animierten grafischen Schimmereffekts (30) von den benachbarten Verarbeitungseinheiten (4.i, 4.i+1), die dasselbe binäre Sicherheitseinheitssignal (1) verarbeiten, verwendet wird;
- wo der grafische Schimmereffekt (30) animiert ist, sich als ein Objekt (30), das aus den Teilen (30.i) zusammengesetzt ist, über das Symbol (20) auf eine Weise zu bewegen, dass:
C. der grafische Sicherheitsschimmereffekt (30) fortlaufend über das Symbol (20) erscheint, falls die gesamten Verarbeitungseinheiten (4.i) synchronisiert sind und
D. der grafische Sicherheitsschimmereffekt (30) unterbrochen für alle Symbolteile (20.k) erscheint, die von den entsprechenden Verarbeitungseinheiten (4.k) erzeugt werden, die von dem Satz von Verarbeitungseinheiten (4.i) desynchronisiert sind, die miteinander synchronisiert sind; wobei die Unterbrechung des grafischen Schimmereffekts (30) Hardwareversagen der Datenverarbeitungsvorrichtung (99) für den Menschen als den sicheren Komparator anzeigt.

2. Verfahren zum Betreiben der Datenverarbeitungsvorrichtung (99) zum Anzeigen eines oder mehrerer binärer Sicherheitseinheitssignale (1), die von einer oder mehreren Sicherheitseinheiten (2) nach Anspruch 1 erzeugt werden, wobei nur eine Synchronisationseinheit (5.1) als die Synchronisationseinheit für alle Verarbeitungseinheiten (4.i), die zum Anzeigen desselben grafischen Symbols (20) eines Sicherheitseinheitssignals (1) verwendet werden, das redundant über zwei oder mehr unabhängige Kommunikationskanäle (3.i) übertragen wird, verwendet wird.

3. Verfahren zum Betreiben der Datenverarbeitungsvorrichtung (99) zum Anzeigen eines oder mehrerer binärer Sicherheitseinheitssignale (1), die von einer oder mehreren Sicherheitseinheiten (2) nach Anspruch 2 erzeugt werden, wobei zwei Verarbeitungseinheiten (4.1, 4.2) zum Anzeigen eines grafischen Symbols (20) verwendet werden.

4. Verfahren zum Betreiben der Datenverarbeitungsvorrichtung (99) zum Anzeigen eines oder mehrerer binärer Sicherheitseinheitssignale (1), die von einer oder mehreren Sicherheitseinheiten (2) nach einem der vorstehenden Ansprüche 1-3 erzeugt werden, wobei die Animation der grafischen Schimmereffektteile (30.i) über ein Symbol (20) anzeigt, dass die entsprechenden Verarbeitungseinheiten (4.i), die zum Erzeugen der grafischen Schimmereffektteile (30.i) verantwortlich sind, betriebsfähig sind und empfänglich sind, Signale von der dedizierten Sicherheitseinheit (2) mit dem Sicherheitseinheitssignal (1), das redundant über zwei oder mehr unabhängige Kommunikationskanäle (3.i) übertragen wird, zu empfangen.

5. Verfahren zum Betreiben der Datenverarbeitungsvorrichtung (99) zum Anzeigen einer oder mehrerer binärer Sicherheitseinheitssignale (1), die von einer oder mehreren Sicherheitseinheiten (2) nach einem der vorstehenden Ansprüche 1-4 erzeugt werden, wobei der grafische Schimmereffekt (30) linienförmig ist.

6. Verfahren zum Betreiben der Datenverarbeitungsvorrichtung (99) zum Anzeigen eines oder mehrerer binärer Sicherheitseinheitssignale (1), die von einer oder mehreren Sicherheitseinheiten (2) nach einem der vorstehenden Ansprüche 1-5 erzeugt werden, wobei der externe Monitor und die Tastatur zum Anzeigen der empfangenen Daten und Konfigurieren der Datenverarbeitungsvorrichtung (99) verwendet werden.

7. Datenverarbeitungsvorrichtung (99), die konfiguriert ist, ein oder mehrere binäre Sicherheitseinheitssignale (1), die von einer oder mehreren ferngelegenen Sicherheitseinheiten (2) von der Datenverarbeitungsvorrichtung (99) erzeugt werden, anzuzeigen, wo jedes binäre Sicherheitseinheitssignal (1) redundant über zwei oder mehr unabhängige Kommunikationskanäle (3.i); i = 1, 2, ... N an die Verarbeitungsvorrichtung (99) übertragen wird, wo die Verarbeitungsvorrichtung (99) aus einer Vielzahl von Verarbeitungseinheiten (4), die dazu konfiguriert sind, Sicherheitseinheitssignale (1) zu verarbeiten, zumindest einer Synchronisationseinheit (5) und einer Anzeigesteuereinheit (6), die dazu konfiguriert ist, das digitale Signal (7), das von einer Verarbeitungseinheit (4) erzeugt wird, als einen Satz von grafischen Symbolen (20) auf einer Anzeige (10) anzuzeigen, und optional aus Eingabe-AusgabeVorrichtungen besteht, wobei die Datenverarbeitungsvorrichtung (99) konfiguriert ist, das Verfahren durchzuführen, das in einem der Ansprüche 1-6 definiert ist.

8. Datenverarbeitungsvorrichtung (99) nach Anspruch 7, wobei das binäre Sicherheitseinheitssignal (1) ein Eisenbahnsicherheitseinheitssignal ist, das die exakte Rampenposition des Bahnübergangs vom fernen Standort festlegt.

## Revendications

1. Procédé de fonctionnement d'un dispositif de traitement de données (99) pour afficher un ou plusieurs signaux d'unité de sécurité binaires (1) générés par une ou plusieurs unités de sécurité (2) situées à distance à partir dudit dispositif de traitement de données (99) :
- où le dispositif de traitement de données (99) présente une pluralité d'unités de traitement (4) pour traiter les signaux d'unité de sécurité (1), au moins une unité de synchronisation (5) et une unité de commande d'affichage (6) pour afficher les signaux numériques (7) générés par des unités de traitement (4) sous la forme d'un ensemble de symboles graphiques (20) sur un dispositif d'affichage (10), et facultativement des dispositifs d'entrée-sortie ;
- où chaque signal d'unité de sécurité binaire (1) est transmis de manière redondante sur deux canaux de communication (3.i) indépendants ou plus ; i = 1, 2, ... N audit dispositif de traitement de données (99) ; chaque canal de communication (3.i) est connecté à l'unité de traitement (4.i) correspondante dudit dispositif de traitement de données (99), où chaque unité de traitement (4.i) envoie un signal (7.i) à l'unité de commande d'affichage (6) :
A. pour générer et mettre évidence uniquement une partie d'une géométrie de symbole (20.i) sur le dispositif d'affichage (10) pour lesdites unités de traitement (4.i) qui ont reçu le signal VRAI (TRUE) en tant que signal d'unité de sécurité binaire (1), ou
B. pour générer et assombrir uniquement une partie d'une géométrie de symbole (20.j) sur le dispositif d'affichage (10) pour lesdites unités de traitement (4.j) qui ont reçu le signal FAUX (FALSE) en tant que signal d'unité de sécurité binaire (1) ;
où toutes les parties d'une géométrie de symbole (20. i, 20. j, ...) forment ensemble une image de symbole entier (20) pour le signal d'unité de sécurité dédiée (1) qui est visuellement différent de l'écran d'arrière-plan pour l'humain en tant que comparateur sûr ;
**caractérisé en ce que**
- chaque unité de synchronisation (5.j) connecte et synchronise lesdites unités de traitement voisines (4.i, 4.i + 1) qui traitent le même signal d'unité de sécurité binaire (1) ;
- où le signal de synchronisation provenant de l'unité de synchronisation (5.i) est utilisé pour le calcul d'un effet graphique de reflet animé (30) par les unités de traitement voisines (4.i, 4.i + 1) qui traitent le même signal d'unité de sécurité binaire (1) ;
- où ledit effet graphique de reflet (30) est animé pour se déplacer à travers le symbole (20) en tant qu'objet (30) qui est composé des parties (3O.i) de telle sorte que :
C. l'effet graphique de reflet de sécurité (30) apparaît continu à travers le symbole (20) si toutes les unités de traitement (4.i) sont synchronisées, et
D. l'effet graphique de reflet de sécurité (30) apparaît discontinu pour toutes les parties de symbole (20.k) générées par les unités de traitement correspondantes (4.k) qui sont désynchronisées par rapport à l'ensemble des unités de traitement (4.i) qui sont synchronisées entre elles; dans lequel ladite discontinuité dans l'effet graphique de reflet (30) indique une défaillance matérielle du dispositif de traitement de données (99) pour l'humain en tant que comparateur sûr.

2. Procédé de fonctionnement du dispositif de traitement de données (99) pour afficher un ou plusieurs signaux d'unité de sécurité binaires (1) générés par une ou plusieurs unités de sécurité (2) selon la revendication 1, dans lequel une seule unité de synchronisation (5.1) est utilisée en tant qu'unité de synchronisation pour toutes les unités de traitement (4.i) utilisées pour afficher le même symbole graphique (20) d'un signal d'unité de sécurité (1) qui est transmis de manière redondante sur deux canaux de communication (3.i) indépendants ou plus.

3. Procédé de fonctionnement du dispositif de traitement de données (99) pour afficher un ou plusieurs signaux d'unité de sécurité binaires (1) générés par une ou plusieurs unités de sécurité (2) selon la revendication 2, dans lequel deux unités de traitement (4.1, 4.2) sont utilisées pour afficher un symbole graphique (20).

4. Procédé de fonctionnement du dispositif de traitement de données (99) pour afficher un ou plusieurs signaux d'unité de sécurité binaires (1) générés par une ou plusieurs unités de sécurité (2) selon l'une quelconque des revendications 1-3 précédentes, dans lequel l'animation des parties d'effet graphique de reflet (30.i) à travers un symbole (20) indique que les unités de traitement (4.i) correspondantes, chargées de générer lesdites parties d'effet graphique de reflet (30.i), sont opérationnelles et sensibles pour les signaux de réception provenant de l'unité de sécurité (2) dédiée avec le signal d'unité de sécurité (1) qui est transmis de manière redondante sur deux canaux de communication (3.i) indépendants ou plus.

5. Procédé de fonctionnement du dispositif de traitement de données (99) pour afficher un ou plusieurs signaux d'unité de sécurité binaires (1) générés par une ou plusieurs unités de sécurité (2) selon l'une quelconque des revendications 1 à 4 précédentes, dans lequel ledit effet graphique de reflet (30) est en forme de ligne.

6. Procédé de fonctionnement du dispositif de traitement de données (99) pour afficher un ou plusieurs signaux d'unité de sécurité binaires (1) générés par une ou plusieurs unités de sécurité (2) selon l'une quelconque des revendications 1-5 précédentes, dans lequel le moniteur externe et le clavier sont utilisées pour afficher les données reçues et configurer ledit dispositif de traitement de données (99).

7. Dispositif de traitement de données (99) configuré pour afficher un ou plusieurs signaux d'unité de sécurité binaires (1) générés par une ou plusieurs unités de sécurité (2) situées à distance à partir dudit dispositif de traitement de données (99), où chaque signal d'unité de sécurité binaire (1) est transmis de manière redondante sur deux canaux de communication (3.i) indépendants ou plus ; i = 1, 2, ... N audit dispositif de traitement (99), où ledit dispositif de traitement (99) consiste en une pluralité d'unités de traitement (4) configurées pour traiter les signaux d'unité de sécurité (1), au moins une unité de synchronisation (5) et une unité de commande d'affichage (6) configurée pour afficher le signal numérique (7) généré par une unité de traitement (4) sous la forme d'un ensemble de symboles graphiques (20) sur un dispositif d'affichage (10), et facultativement des dispositifs d'entrée-sortie, ledit dispositif de traitement de données (99) étant configuré pour réaliser le procédé défini dans l'une quelconque des revendications 1-6.

8. Dispositif de traitement de données (99) selon la revendication 7, dans lequel le signal d'unité de sécurité binaire (1) est un signal d'unité de sécurité ferroviaire qui établit la position de rampe exacte du passage à niveau à partir de l'emplacement distant.
